# EUROPEAN PATENT APPLICATION

(11) **EP 1 310 170 A1**
(43) Date of publication of application: **14.05.2003**
(21) Application number: 02079587.8
(22) Date of filing: 01.11.2002
(51) Int. Cl.: A21C 5/00

(54) **Portioning machine**

(30) Priority: 08.11.2001 IT MI20012350
(71) Applicant: OEM - Ali S.p.A, 20123 Milan (IT)
(72) Inventor: Berti, Luciano, 44100 Ferrara (IT)
(74) Representative: De Gregori, Antonella

(57) **Abstract**

A portioning machine comprising a machine body (12) equipped with a hopper (14), which receives a dough for pizza, bread or another oven-baked product and in which means for feeding said dough towards a cutting group (13) through a tubular measuring terminal (18), consisting of a first convergent frusto-conical portion (21) and a moulding chamber (22), is foreseen, is provided with a device (35, 37) for detecting the position of a rotary blade (23) which defines a completely blocked position and a position opening the measuring terminal (18), the rotary blade (23) having a flat surface (30) at least equal to an outlet section (32) of the moulding chamber (22).

## Description

The present invention refers to a portioning machine.

In the field of the treatment of food doughs, such as dough for pizza, bread or other oven-baked products, it is necessary to have a high-productivity machine to carry out the individual treatment steps. For example, kneading machines, as well as portioning and rounder machines to treat unrisen doughs, obtaining small blocks which can be kept for a certain amount of time. After rising, the individual portions of dough, or small blocks, are worked by dedicated machines which give the food product the final shape before cooking in the oven.

The introduction of dedicated machines for the main treatment steps allows productivity to be increased at the same time increasing the precision of treatment, as well as improving the hygiene standards.

A portioning or cutting machine is fed with dough for pizza, bread or another oven-baked product, obtained by a dough-making machine. The unrisen dough is pushed out from the machine by a motorised feeding screw through a measuring funnel or cone. The cylinder of dough thus extruded is then cut to the desired length through a rotary blade, which intercepts the dough near to the outlet section of the measuring funnel. Based upon the diameter of the outlet section of the funnel and the length of the piece of dough weights of the small blocks up to a maximum of about 300 grams can be obtained.

Known portioning machines, indeed, do not allow greater weights of cylinders of dough to be cut. The outlet diameter of the measuring funnel and the length of the cut piece of dough cannot be increased as desired without having a negative influence upon the productivity of the portioning machine. For example, a cylinder of dough which is too long or which has an excessive diameter would make it difficult to carry out the extrusion process and the subsequent treatments.

The purpose of the present invention is that of realising a portioning machine which allows cylinders of dough whose size can be adjusted within a wide range, with a low percentage error in weight.

Another purpose of the present invention is that of realising a portioning machine suitable for cutting different types of dough, which keeps the rising characteristics of the dough unchanged.

Another purpose of the present invention is that of realising a portioning machine which is particularly simple and functional, with low costs.

These purposes according to the present invention are achieved by realising a portioning machine as outlined in claim 1.

Further characteristics are foreseen in the dependent claims.

The characteristics and advantages of a portioning machine according to the invention shall become clearer from the following description, given as an example and not for limiting purposes, referring to the attached schematic drawings, in which:
figure 1 is a perspective view of a portioning machine with the inside partially shown;
figure 2 is a schematic side elevation view of the portioning machine of figure 1 in partial section according to the line II-II indicated in figure 5;
figure 3 is a side view of an enlarged detail of figure 2, which shows command sensors of the portioning machine;
figures 4 and 5 are front views of a detail depicting an extruder terminal and a blade in open position and in shutting position.

With reference to the figures, a portioning machine, wholly indicated with 10, is shown, made up of a machine body 12, equipped with a hopper 14, which receives an unrisen dough for pizza, bread or another oven-baked product, and in which means for feeding towards a cutting group 13 is arranged.

The hopper 14, in general closed at the top by a protective cover, houses a feeding screw 17, which, actuated by a motor 16, pushes the dough out from the hopper 14, through an interchangeable tubular measuring terminal 18.

The measuring terminal 18 is applied through a dismountable connection, for example consisting of a bayonet connection 20, to a centring ring 19 present on the outer wall of the machine body.

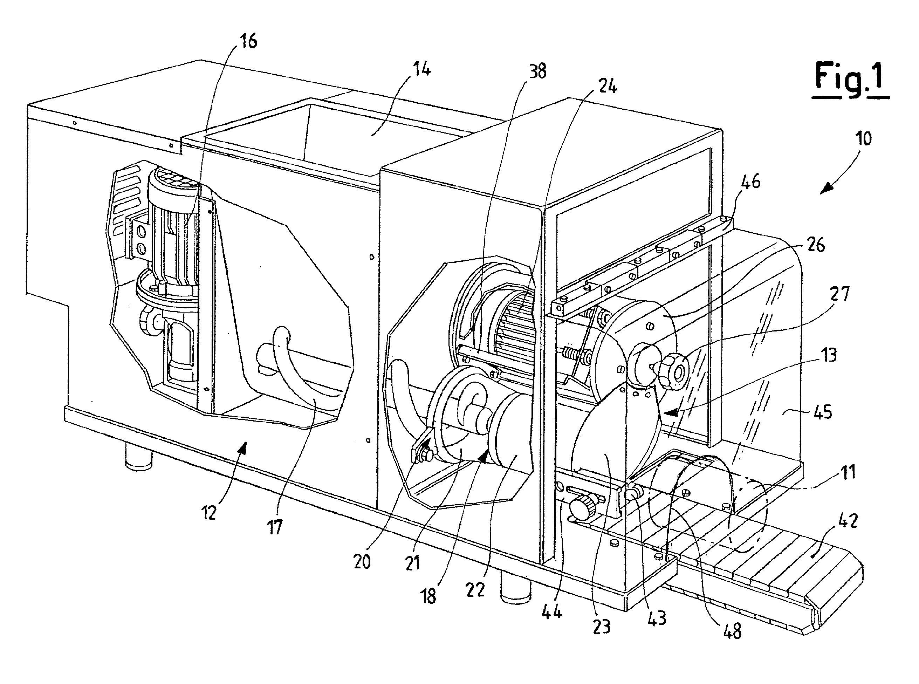

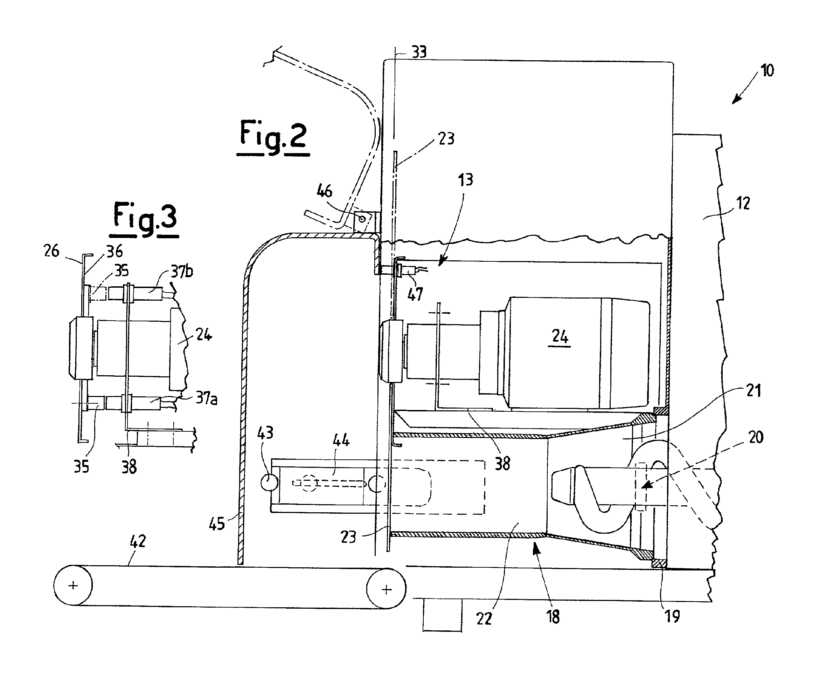

The measuring terminal 18, or measurer, is made up of a first convergent frusto-conical portion 21 and a moulding chamber 22 of a length generally greater than the frusto-conical portion 21. In a preferred embodiment shown in figures 1 and 2, the moulding chamber 22 is cylindrical, with an inner diameter equal to the diameter of the outlet section of the frusto-conical portion 21.

Measuring terminals 18, not shown, can have moulding chambers 22 of various diameters or having a different non-cylindrical shape.

The measurer 18, made from aluminium or another metallic material, is internally coated with Teflon, a material suitable for contact with food products and equipped with excellent characteristics of slipperyness.

The cutting group 13 is made up of a rotary blade 23 actuated by an electric motor 24, arranged above and misaligned with respect to the measuring terminal 18.

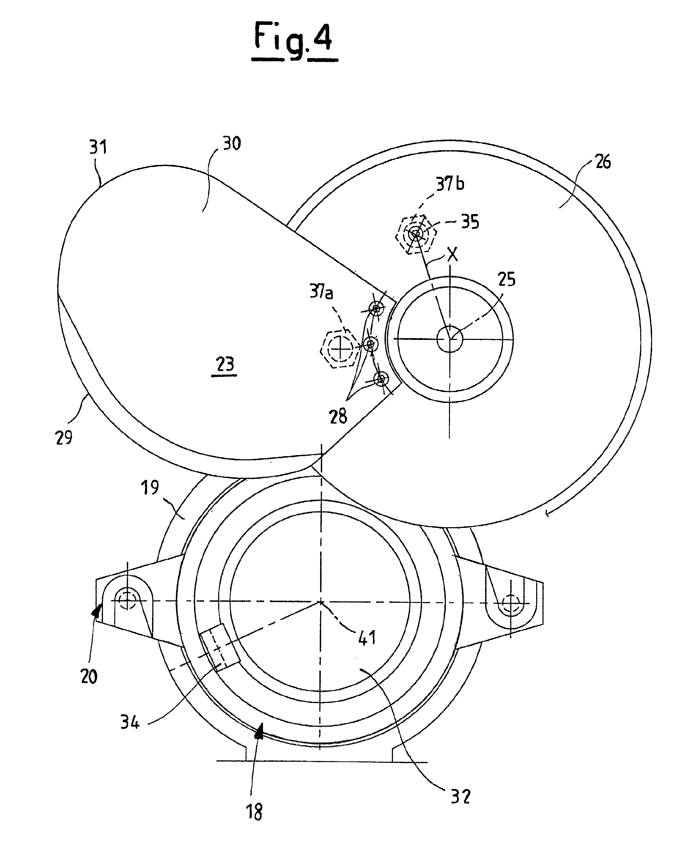

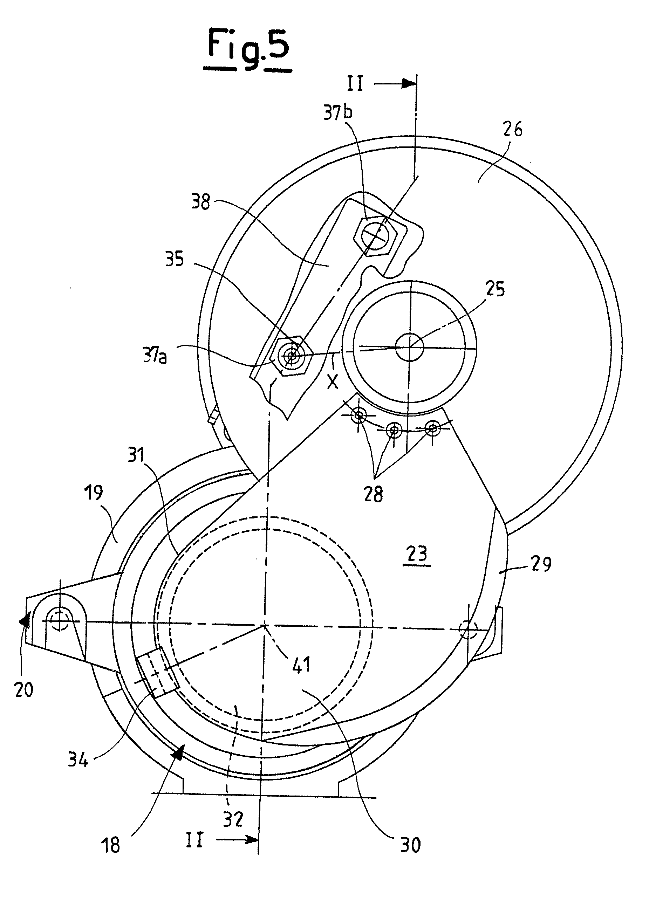

Directly on a shaft 25 of the motor a blade-carrying platelet 26 is fixed, held axially, for example through a hand grip 27 shown in figure 1. The rotary blade 23 is stably attached to the platelet 26, for example through a threaded connection 28 consisting of three screws shown in figures 4 and 5.

The blade 23, which rotates on a cutting plane 33, arranged immediately downstream of the outlet section 32 of the moulding chamber 22, has a curved, half-moon shaped cutting edge 29, a flat surface 30 and a rounded end 31.

The size of the flat surface 30 of the blade 23 is at least equal to that of an outlet section 32 of the moulding chamber 22. There is thus the complete blocking of the outlet section 32 of the measuring terminal 18 in the position of figure 5.

An engagement element 34, protruding with respect to the outlet section 32, is applied to the outside of the moulding chamber 22 at a point which is tangent to the trajectory of the blade 23 in the cutting plane 33. When the blade 23 is in the position of figure 5 the engagement element 34 holds its rounded end 31.

A device for detecting the position of the blade comprises a magnet 35, screwed onto a rear side 36 of the platelet 26, and two magnetic command sensors 37a and 37b. The magnet 35 and the sensors 37, applied to a support bracket 38, are placed at the same distance X from the drive shaft 25 to be next to each other during the rotation of the blade 23.

For greater clarity of representation the section of figure 2 is realised according to two distinct planes which have the line II-II indicated in the detail of figure 5. A first section plane is inclined and contains both of the sensors 37; a second section plane is vertical and contains an axis 41 of the measuring terminal 18.

The enlarged detail of figure 3 schematically shows, in an unbroken line and a dotted and dashed line respectively, the two possible detection positions of the blade, which correspond to a blocking position of the measuring terminal 18 (figure 5) and an open position thereof (figure 4). In blocking position the magnet 35 faces the lower sensor 37a; in open position, on the-other hand, the magnet 35 faces the upper sensor 37b.

A motorised conveyor belt 42 is arranged near to the outlet of the measurer 18 to support the cylinder of dough during its extrusion and to accompany it in the axial displacement movement.

A device for detecting the length of the extruded cylinder of dough, forming part of the cutting group 13, for example consists of a photocell sensor 43. The sensor 43 is applied to the outlet of the measuring terminal 18 on a guide 44 which allows its axial position to be adjusted. The adjustment is carried out according to the length of a lump of dough 11 to be cut, shown with a broken line in figure 1, and according to the characteristics of the dough.

The front part of the portioning machine 10 is protected by a case 45, in general made from transparent plastic material, applied to the machine body 12 through hinges 46. The case 45 has the function of preventing accidental contacts with the moving blade 23 and is provided with a closing sensor 47, which interrupts the operation of the portioning machine 10 when it detects the opening of the case 45.

In the case 45 means for evacuating lumps of dough 11 out from the machine are foreseen, which just as a nonlimiting example is schematised is figure 1 by an opening 48.

The portioning machine, object of the present invention only functions when the protective cover and the case 45, monitored by suitable sensors 47, are closed.

The motorised feeding screw 17 extrudes from the unrisen dough, loaded periodically into the hopper 14, the cylinder of dough with a full section. The extruded cylinder of dough, coming out from the measuring terminal 18, rests upon the conveyor belt 42 which accompanies its advancing movement.

Electronic circuits, not shown, process the signals coming from the device for detecting the length of the extruded cylinder of dough, the photocell 43, and from the device for detecting the position of the blade, the magnet 35 and the sensors 37, and command the intermittent and temporally out of phase operation of the feeding screw 17 and of the rotary blade 23.

When the photocell 43 detects a length of the extruded cylinder of dough equal to the axial adjustment of the photocell 43 itself, it commands the start-up of the cutting cycle.

The feeding screw 17 stops and the rotary blade 23 is halted, going from the open position, represented in figure 4, to the position completely blocking the outlet section 32 of the moulding chamber 22 of figure 5.

In open position the magnet 35, integral with the platelet 26, is detected by the upper sensor 37b; in the blocking position, on the other hand, the magnet 35 faces the lower sensor 37a.

The blade 23, with the cutting edge 29, intercepts the cylinder of dough near to the outlet section 32 of the moulding chamber 22 and cuts it thus realising a lump of dough 11 of the desired length, which is sent towards the subsequent treatments by the conveyor belt 42.

When the feeding screw 17 restarts it rotary extrusion motion, the blade 23 stays in blocking position (figure 5) for an adjustable time in the order of fractions of a second, which constitutes a moulding step of the cylinder of dough. Indeed, the dough contained in the terminal 18, and in particular that contained in the moulding chamber 22, is compressed against the flat surface 30 of the blade 23 and compacts itself. The lump of dough 11 extruded thereafter, in such a way will have as precise a cylindrical shape as possible. The blade 23 in the blocking position is held by the engagement element 34, which prevents it from deforming following the compression action applied by the dough pushed by the feeding screw 17.

In the case of extrusion of cylinders of dough with a large diameter, at the time of cutting the stresses inside- the material not previously compacted would cause a substantial shrinking of the peripheral portion, with consequent swelling of the cutting surface.

Given that the weight of the lump of dough 11 is determined through the control of the length of the extruded cylinder, the maximum precision of shape is necessary to carry out the cutting of small blocks with a constant weight or at least with a small percentage error in weight.

Moreover, during the initial or final operating steps of the portioning machine, i.e. in the presence of a small amount of dough inside the measuring terminal, vacuums can be created which are advantageously recovered through compression during the moulding step.

The blade 23 then restarts its rotary motion to extrude a new cylinder of dough in the open position with the magnet 35 facing the upper sensor 37b.

The portioning machine object of the present invention has the advantage of allowing the cutting of portions of dough, even heavy ones, which are constant.

The dough contained in the extrusion terminal is, indeed, advantageously compacted before being pushed out beyond the cutting plane of the blade.

The extrusion of the cylinder of dough is also advantageously promoted by the sliding action of the motorised conveyor belt.

Moreover, the extrusion terminal, internally coated with Teflon or another highly slippery material, allows a substantial reduction in friction and consequently in the heating of the dough during the extrusion. The risk of pre-rising of the dough is thus advantageously avoided.

## Claims

1. Portioning machine comprising a machine body (12) equipped with a hopper (14), which receives a dough for pizza, bread or another oven-baked product and in which means for feeding said dough through a tubular measuring terminal (18) towards a cutting group (13) is foreseen, wherein said cutting group (13) comprises a motorised rotary blade (23), **characterised in that** said tubular measuring terminal (18) is made up of a first convergent frusto-conical portion (21) and a moulding chamber (22) and where said portioning machine is provided with a device (35, 37) for detecting the position of said blade (23) which defines a completely blocked position and a position opening said measuring terminal (18), said rotary blade (23) having a flat surface (30) at least equal to an outlet section (32) of the moulding chamber (22).

2. Portioning machine according to claim 1, **characterised in that** said cutting group (13) comprises a device (43) for detecting the length of an extruded lump of dough (11) to start up the cutting cycle.

3. Portioning machine according to claim 2, **characterised in that** said device for detecting the length of an extruded lump of dough (11) is a photocell sensor (43) applied on an axially adjustable guide (44).

4. Portioning machine according to claim 1, **characterised in that** said rotary blade (23) has a curved cutting edge (29), and a flat surface (30) which is arranged at the outlet section of said moulding chamber (22).

5. Portioning machine according to claim 1, **characterised in that** it is equipped with an engagement element (34), protruding with respect to said outlet section (32) at a point tangent to the trajectory of said blade (23) in a cutting plane (33) which holds a rounded end (31) of said blade (23), in a position completely blocking said outlet section (32).

6. Portioning machine according to claim 1, **characterised in that** said position detecting device consfists of a magnet (35) arranged on a rear side of a blade-carrying platelet (26) and of at least two magnetic command sensors (37a, 37b) facing said magnet (35).

7. Portioning machine according to claim 1, **characterised in that** it is equipped with a motorised conveyor belt (42) arranged at the outlet of said measuring terminal (18).

8. Portioning machine according to claim 1, **characterised in that** said measuring terminal (18) is interchangeable.

9. Portioning machine according to claim 1, **characterised in that** said measuring terminal (18) is made from metallic material and is internally coated with highly slippery material.

10. Portioning machine according to claim 9, **characterised in that** said highly slippery coating material is Teflon.
